# EUROPEAN PATENT SPECIFICATION

(11) **EP 0 565 234 B1**
(45) Date of publication and mention of the grant of the patent: **03.09.1997**
(21) Application number: 93301702.2
(22) Date of filing: 05.03.1993
(51) Int. Cl.: C08K 3/22, C08K 5/09, C08J 3/20, C08L 57/00

(54) **Polymer blends containing incompatible polymers**
Polymergemische mit unverträglichen Polymeren
Mélanges de polymères contenant des polymères incompatibles

(30) Priority: 08.04.1992 US 865397
(43) Date of publication of application: 13.10.1993
(73) Proprietor: ROHM AND HAAS COMPANY, Philadelphia Pennsylvania 19105 (US)
(72) Inventor: Boyce, Scott Daniel, North Wales, Pennsylvania 19454 (US); Sperry, Peter Reeves, Doylestown, Pennsylvania 18901 (US)
(74) Representative: Angell, David Whilton

(56) References cited:
- US-A- 3 437 718

## Description

This invention relates to polymer blends and, more particularly, it relates to incompatible polymer blends that are made compatible by utilizing certain divalent metal compounds to modify the microstructure of the polymer blend.

Polymer blending is well known. The usual purpose in blending polymers is to obtain a product or composition which combines the desired properties of the individual polymer constituents. By blending polymers, some weakness that is inherent in any one of the polymers, when employed singularly, is overcome by the other polymer when utilized as a blend.

In general, the number of polymers that may be blended to produce a blend having properties superior to any one of the individual constituents is severely limited by compatibility problems. Consequently, what is required is a novel method to compatibilize otherwise incompatible polymers, such that the resulting polymer blend has enhanced properties.

U.S. Patent No. 3,437,718 describes the modification of otherwise incompatible addition polymers by copolymerization with alpha, beta-ethylenically unsaturated carboxylic acid monomer, ionically cross-linking the copolymer components of the blend and simultaneously blending the polymer components until a compatible, transparent blend is obtained. The copolymers of the invention are made compatible by the reaction of the copolymers with certain ionizable metal compounds. The preferred metal ions are the metal salts of very weak acids, such as fatty acids, with ionizable acids such as formic acid or acetic acid. These metal ions have a valence of one (1) and include Na⁺, K⁺, Li⁺, Cs⁺, Ag⁺, Hg⁺ and Cu⁺. Alkali metals are preferred and are allegedto improve the properties of the polymers by improving their compatibility.

B. Vollmert and W. Schoene, "Ionomer Graft Copolymers of Polystyrene-Polybutylacrylate", in Colloidal and Morphological Behavior of Block and Graft Copolymers, G. E. Molau, Ed., Plenum Press, New York (1971), pp. 145-156, describe the influence of 5, 10 or 15 weight percent acrylic acid as a copolymer component in the polymer chain on the compatibility of the polystyrene-polybutylacrylate system. Vollmert and Schoene found that a change in mechanical properties is realized by increasing the degree of neutralization of the ionomer blend. The experiments were stated to have shown that copolymers of styrene and acrylic acid and copolymers of butyl acrylate and acrylic acid are incompatible and that they become compatible if the carboxyl groups are partially or completely neutralized with sodium hydroxide, potassium hydroxide or cesium hydroxide.

U.S. Patent No. 4,187,358 discloses a resin composition of (1) an aromatic co-polyester derived from (a) a mixture of terephthalic and isophthalic acid and (b) a bisphenol, (2) a polyamide and (3) an ionomer. The ionomer is disclosed to be a copolymer containing an alpha, β-unsaturated carboxylic acid in a product obtained by reacting the copolymer with a metal compound capable of ionizing the carboxylic acid in the copolymer. The base copolymer is an alpha-olefin/alpha, β-unsaturated carboxylic acid copolymer. The metallic ions suitable for neutralizing the carboxylic acid group of the base copolymer are preferably metal ions of the group IA, IB, IIA, IIB and IIIA of the periodic table. The metallic ions have a valence of from 1-3 (for example, Na⁺, K⁺, Li⁺, Cu²⁺, Be²⁺, Zn²⁺ and Al³⁺). The compositions prepared according to the above invention are alleged to exhibit improved impact resistance and brittleness.

U.S. Patent No. 4,387,188 discloses compositions of alpha-olefin/ unsaturated carboxylic acid copolymers, graft copolymers of unsaturated acid monomers on a polyolefin backbone and mineral or glass fibers. Ionomers are obtained by neutralizing the carboxylic acid with metal ions such as zinc.

U.S. Patent No. 4,722,972 discloses a blend of styrene/ unsaturated carboxylate and ethylene/unsaturated carboxylate ionomers. Ammonium salts of styrenic and ethylenic copolymers of acrylic acid and methacrylic acid are used. The patent alleges that a blown foamed film with superior toughness is obtained.

It is therefore an object of this invention to provide a means by which normally incompatible polymers can be made compatible and be blended to yield a polymer with superior properties.

Another object of this invention is to provide a process for homogeneously blending polymers which are otherwise regarded as incompatible.

Still another object of the present invention is to provide a polymer film which has improved physical properties and optical properties.

According to a first aspect of the present invention there is provided a copolymer blend of addition copolymers comprising a first copolymer and a second copolymer, each independently comprising from 70 to 95 weight percent of monomers comprising methyl (meth)acrylate, ethyl (meth)acrylate, propyl (meth)acrylate, butyl (meth)acrylate, isobutyl (meth)acrylate, 2-ethylhexyl (meth)acrylate, lauryl (meth)acrylate, (meth)acrylamide or (meth)acrylonitrile, and 30 to 5 weight percent of functional unsaturated monomers comprising (meth)acrylic acid, acryloxypropionic acid or acetoacetoxyethyl (meth)acrylate; and a divalent metal compound comprising calcium hydroxide, barium hydroxide or strontium oxide; wherein the first copolymer and the second copolymer are incompatible copolymers, and the metal compound is added to compatibilize otherwise incompatible copolymer blends.

Coatings made from the polymer blends of this invention exhibit improved physical and optical properties.

Even though some alkali metals and certain transition metals have been used in the past to improve the compatibility of some kinds of polymer blends, we have found in particular that certain multivalent metal ions can be utilized to control the physical and optical properties of certain copolymer blends consisting of copolymers prepared from vinyl monomers.

According to a second aspect of the present invention there is provided a process for compatibilizing copolymer blends from otherwise incompatible copolymers which comprises mixing a compatibilizing amount of calcium hydroxide, barium hydroxide or strontium oxide with from 5 to 95 weight percent of a first copolymer and from 5 to 95 weight percent of a second copolymer, each copolymer independently comprising from 70 to 95 weight percent of monomers comprising methyl (meth)acrylate, ethyl (meth)acrylate, propyl (meth)acrylate, butyl (meth)acrylate, isobutyl (meth)acrylate, 2-ethylhexyl (meth)acrylate, lauryl (meth)acrylate, (meth)acrylamide or (meth)acrylonitrile, and 30 to 5 weight percent of functional unsaturated monomers comprising (meth)acrylic acid, acryloxypropionic acid or acetoacetoxyethyl (meth)acrylate.

According to a third aspect of the present invention there is provided the use of calcium hydroxide, barium hydroxide or strontium oxide to compatibilise two copolymers that otherwise would be incompatible, wherein the copolymers each independently comprise from 70 to 95 weight percent of monomers comprising methyl (meth)acrylate, ethyl (meth)acrylate, propyl (meth)acrylate, butyl (meth)acrylate, isobutyl (meth)acrylate, 2-ethylhexyl (meth)acrylate, lauryl (meth)acrylate, (meth)acrylamide or (meth)acrylonitrile, and 30 to 5 weight percent of functional unsaturated monomers comprising (meth)acrylic acid, acryloxypropionic acid or acetoacetoxyethyl (meth)acrylate.

Preferably, the blend comprises from about 5 to about 95 weight percent of the first copolymer and from about 95 to about 5 weight percent of the second copolymer and wherein the first copolymer and the second copolymer are otherwise incompatible.

Preferably, the divalent metal compound comprises from about 0.5 to about 24 weight percent based on the weight of the copolymer blend.

According to a fourth aspect of the present invention there is provided a clear film comprising the composition according to the first aspect of the present invention or a film prepared by the process according to the second aspect of the present invention.

The present invention therefore provides a polymer blend and a process for preparing the same having a first copolymer, a second copolymer and a divalent metal compound wherein the first copolymer and the second copolymer are incompatible and wherein the metal compound is added to compatibilize otherwise incompatible polymers having improved physical and optical properties.

The copolymer blends of the present invention are compatibilized by reacting copolymer constituents with divalent metal compounds. The reaction of the divalent metal compounds with the acid functionality of the copolymer blends gives improved hardness, print resistance and block resistance. The reaction mechanism involved in the formation of compatible polymers from otherwise incompatible blends is unknown. However, it is believed that the specific bonding interaction involving certain divalent metal ions in combination with functionalized monomers offers a unique method to control and limit the degree of phase separation and thereby improve the physical and optical properties of blends of solution polymers.

Typically, the copolymers that form the blends must contain monomers bearing carboxylic acids or other functional groups that are capable of bonding with divalent metal ions. The polymers should otherwise form inhomogeneous, incompatible blends when they are mixed without metal compounds according to the methods described in this invention.

Typically, the copolymers used as blend components in this invention contain carboxylic acid groups or other groups capable of binding to a metal ion. Any two polymers which have the necessary functional group content, and which, when blended with each other, give rise to inhomogeneous, non-uniform, incompatible blends, may be changed into compatible, uniform and homogeneous blends by the process of this invention.

The copolymers employed in the present invention may be prepared in several ways: emulsion polymerization, bulk polymerization, solution polymerization, non-aqueous dispersion polymerization or suspension polymerization.

The copolymers suitable for use in the blends of this invention contain commonly employed olefinically-unsaturated monomers such as acrylates, methacrylates, monoolefinic aliphatic and aromatic hydrocarbons, vinyl esters, vinyl halides, organic nitriles, amides, ketones and the like. The copolymers contain from about 70 to 95 weight percent of monomers selected from methyl (meth)acrylate, ethyl (meth)acrylate, propyl (meth)acrylate, butyl (meth)acrylate, isobutyl (meth)acrylate, 2-ethylhexyl (meth)acrylate, lauryl (meth)acrylate, vinyl acetate, styrene, alpha-methyl styrene, vinyl toluene, (meth)acrylamide, (meth)acrylonitrile, vinyl chloride and vinylidene chloride and 30 to 5 weight percent of functional unsaturated monomers such as olefinically- unsaturated carboxylic acids, diketones, ketoesters, such as (meth)acrylic acid, acryloxypropionic acid, or acetoacetoxyethyl (meth)acrylate, or other groups capable of binding to divalent metal ions.

The copolymer blends of the present invention are made compatible by the reaction of the described first and second copolymer constituents with certain metal compounds having a valence of two(2). Divalent metal ions can be utilized to control the degree of phase separation of two otherwise incompatible polymers and improve the properties of otherwise incompatible polymer blends derived from non-aqueous polymer solutions. It is believed that certain divalent metal compounds affect the microstructure of otherwise incompatible blends prepared from propyl acetate solutions in which each component of the copolymer blend contains a functional monomer.

Alkali metals such as, for example, sodium and potassium, as well as certain divalent metals such as magnesium were ineffective. Other divalent metal such as calcium, strontium and barium were completely effective at compatibilizing otherwise incompatible copolymers. Still other divalent metals, such as zinc, were useful even though they were not as effective as calcium, strontium and barium. A complete understanding of the mechanism of this reaction involving only certain divalent metal ions is unknown. However, it is believed that calcium, strontium and barium ions are effective at compatibilizing the copolymers of otherwise incompatible blends because of their solubility in the copolymers constituents. Whereas, alkali metals and some divalent metals such as magnesium and zinc are not sufficiently soluble to compatibilize copolymers. It is further believed that calcium, strontium and barium are soluble in and effective at compatibilizing the copolymers because they possess sufficiently low charge densities. Again these are mere assertions and beliefs and are not intended in any way to limit the scope of the claimed subject matter of this invention. However, it has been surprisingly and unexpectedly found that certain divalent metal ions improved the hardness, print and block resistances, and also the optical properties of coatings prepared from otherwise incompatible copolymer blends.

Generally, there are three essential aspects of the process for compatibilizing copolymer blends of the present invention thus producing a polymer having improved physical properties. The first essential aspect is concerned with the identity and the concentration of the metal. The second essential aspect is whether or not the metal is added to the copolymer blend as an oxide or hydroxide.

While the other essential aspect of this invention deals with the degree of neutralization required to neutralize the functional monomer concentration of the copolymers.

Depending on the solubility of the metal compound in the polymers and their solutions, and the functional group concentration of the copolymer, certain divalent metal ions may be added to the copolymers of this invention as the oxide or hydroxide It is believed that when the metal is added as the oxide or hydroxide all of the metal bonds to the functional monomer in the copolymers of the blend.

For example, when calcium is added as the oxide or hydroxide, 1 percent of metal based on the weight of the copolymers compatibilizes a blend consisting of a copolymer containing 90 percent ethyl acrylate and 10 percent methacrylic acid with a copolymer containing 90 percent methyl- methacrylate and 10 percent methacrylic acid.

The degree of neutralization required to compatibilize a blend depends on the functional monomer concentration of the copolymers. Neutralization is defined as the ratio of the molar concentration of positive charge to the molar concentration of functional monomer. For example, a blend containing 0.5 moles of Na⁺ [monovalent metal ion or metal with a valence of one (1)] and 1 mole of functional monomer has a degree of neutralization of about 0.5 (50 percent). A blend containing 0.5 moles of Ca²⁺ (divalent metal) and 1.0 moles of functional monomer has a degree of neutralization of 1.0 (100 percent). The degree of neutralization required to compatibilize the copolymer depends on the functional monomer content. For example, two copolymers containing 5 percent methacrylic acid can be compatibilized with calcium at a degree of neutralization ≥ 0.7 (70 percent), whereas two copolymers containing 10 percent methacrylic acid can be compatibilized at a degree of neutralization ≥ 0.4 (40 percent).

Compatibilization of the copolymers is carried out by incorporating the divalent metal compound in the incompatible blend. The metal ion compound which is employed contains the metal in the ionic state, such as oxides or hydroxides. In order to achieve compatibilization, it is essential that the metal be bound to the copolymers.

The compatibilization reaction of this invention is carried out under conditions which allow for a homogeneous distribution of the metal in the copolymer. No particular reaction conditions such as temperature, time or pressure are essential in order to produce polymers with improved physical and optical properties of this invention. The metal can be incorporated in the monomers before polymerization of the first and second copolymers or added to each copolymer before blending or to the blend. The invention demonstrates that a specific interaction involving the divalent metals in combination with the copolymers of this invention offers a unique method to control the phase separation of the otherwise incompatible polymers and thereby improve the physical properties of blends of solution copolymers.

The present invention will now be described by way of example only. In the following Examples, solution polymers were employed in order to demonstrate the effect of metals in compatibilizing otherwise incompatible copolymers.

In the following Examples reference shall be made to the following tests for mechanical properties using published procedures.

Knoop hardness values of the coatings were measured using a Tukon Microhardness Tester manufactured by Page-Wilson Corporation (Bridgeport, CT). The instrument creates a diamond-shaped indentation in the film under a 25 g load. The hardness of the coating is calculated from the length of the indentation which is measured by examining the mark under an optical microscope.

The rigidity of the coatings was measured using pencils according to a procedure described by the American Society for Testing of Materials (ASTM D3363). The test is performed by pushing a pencil lead of a defined hardness across the surface of the coating at an angle of 45°. The test is conducted with harder grades of leads until the film is cut or marred by the pencil.

The block and print resistances of the coatings were measured at 60°C under a pressure of 1 psi (equivalent to 703 kg m⁻²) for 1 hour. The block resistance test is performed by placing two pieces of aluminum panel (1.5 in. square (3.81 cm square)) coated with polymer together. A 1 kg (2.2 pound) weight is placed on top of the panels. A disk (1.68 in (4.27 cm) diameter) is placed between the weight and the panels containing the coatings. The print resistance of the coatings was measured by placing a 2 in. square (5.08 cm square) piece of cheesecloth on top of a piece of aluminum panel (1.5 in. square (3.81 cm square)) coated with polymer. The disk and weight are placed on top of the cheesecloth. The specimens, disks and weights used in the block and print resistance tests are placed in an oven maintained at 60°C for 1 hour. The specimens of panel are removed from the oven. The print and block resistances of the coatings are rated using criteria defined by the American Society for Testing and Materials.

The dynamic mechanical properties of the coatings were measured by dipping a glass braid in a 20% copolymer solution. The copolymer coating was dried at 60°C under vacuum prior to analysis. The dynamic mechanical thermal analyses were performed by subjecting the polymer coated glass braid to a 0.1 percent strain at a rate of 1 Hz and simultaneously heating the sample from -50°C to 200°C at the rate of 4°C/min. The stress on the copolymer coating was recorded as a function of temperature.

Samples of the copolymer coatings were examined by transmission electron microscopy (TEM). The samples were prepared by depositing a film of copolymer solution on a plastic (Plexiglas® DR - Plexiglas is a trade mark of Rohm and Haas Company) substrate and allowing the propyl acetate solvent to evaporate. The copolymer film was "stained" using phosphotungstic acid solution using procedures well known in the art.

### Examples 1 - 13

Table 1 summarizes the composition of the copolymers used to prepare the blends described in Examples 14 - 48. The quantity of each ingredient is based on the total weight of monomer charged to the reaction kettle. A monomer mixture consisting of 45 to 95 parts by weight of monomer A, 5 to 50 parts by weight of monomer B and 0 to 5 parts by weight of monomer C was added over a period of 90 minutes to a reaction kettle containing 0.57 to 1.30 parts by weight of propyl acetate maintained at a temperature of 101°C. Simultaneously, an initiator mixture consisting of 0.012 to 0.015 parts by weight of t-butyl peroctoate and 0.07 to 0.16 parts by weight of propyl acetate was added to the kettle over a 90 minute period. The polymerization reactions were performed in a reaction kettle consisting of a five liter, 4-neck roundbottom flask fitted with a mechanical stirrer, condenser, and tubing through which to introduce nitrogen gas. The temperature of the mixture of monomers, propyl acetate and initiator was maintained at 101°C for 30 minutes before a second initiator mixture consisting of 0.001 parts by weight of t-butyl peroctoate and 0.024 to 0.054 parts by weight of propyl acetate was added to the reaction kettle. The reaction mixture was maintained at 101°C for an additional 30 minutes before it was allowed to cool to room temperature. The procedure yielded a solution of the prescribed copolymer having a weight-average molecular weight, Mw, and number-average molecular weight, Mn, dissolved in propyl acetate at the concentration listed in Table 1.

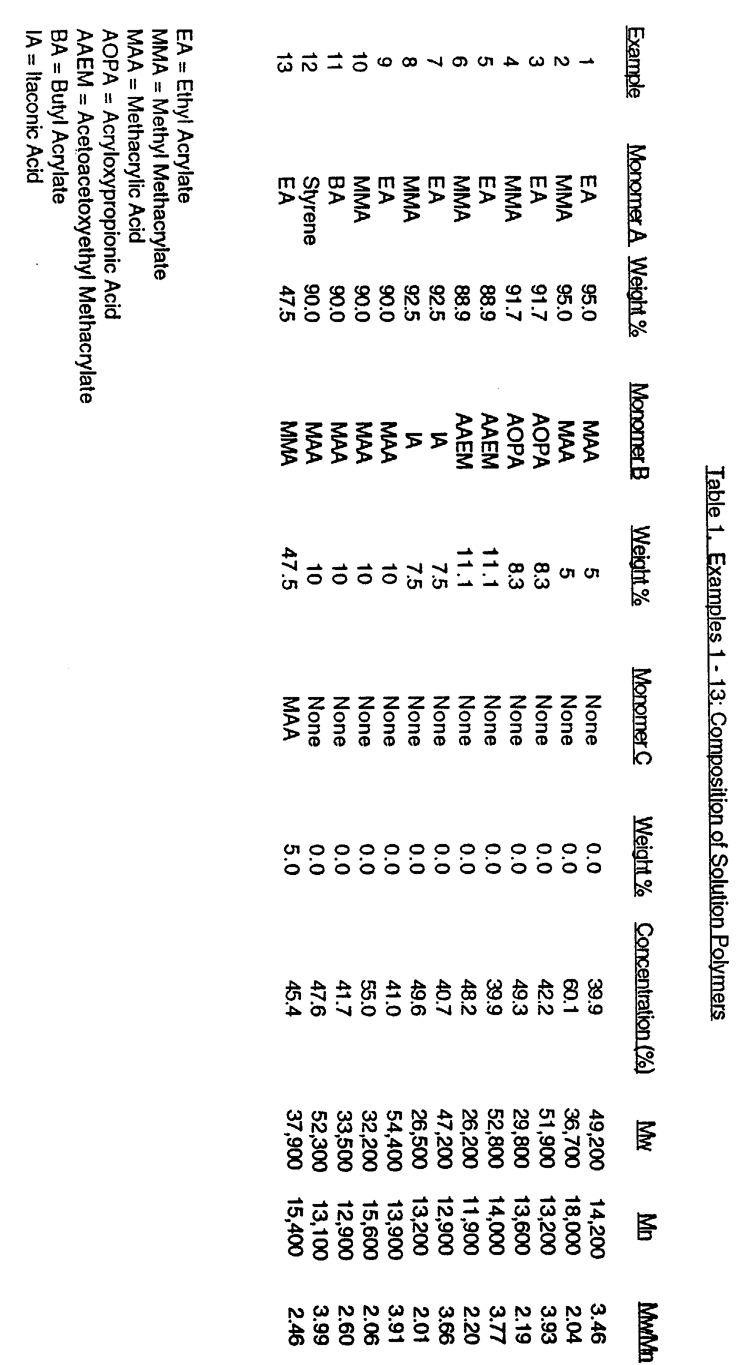

### Examples 14 - 49

Table 3 summarizes the examples. Polymer solutions were prepared in glass jars. Samples of solution copolymers A and B were diluted separately with propyl acetate to produce solutions of the prescribed solids concentrations. Deionized water (0.2 g/10 g of copolymer solution) was added to the propyl acetate/copolymer solutions. The water dissolved readily in the copolymer/propyl acetate solution upon stirring the liquid with a magnetic stirrer or gently shaking the contents of the jar. Solutions of copolymers A and B were mixed in the prescribed proportions. The metal oxide, hydroxide, or octoate salt was added in solid form to the mixture of solutions of copolymers A and B. The copolymer blend solution was stirred during addition of the metal salt. Stirring continued until the metal salt had dissolved in the copolymer solution. A copolymer film of the prescribed thickness was prepared by coating glass plates or aluminum panels with the copolymer solution using an eight-sided wet film applicator (Paul N. Gardner Company, Inc., Pompano Beach, FL) using methods known in the art. Films were dried under ambient conditions (room temperature and relative humidity) for periods of several days to several weeks. Thin (0.0015 in. (0.00381 cm)) coatings prepared on glass plates were examined visually for optical transparency by placing the plate against a black background. Mechanical tests were performed on coatings (0.001 in. (0.00254 cm)) deposited on aluminum panels (Allodyne® 1200 S, Parker-Amchem). The coatings were heated at 150 degrees Celsius for one hour prior to testing.

In Table 3 the following codes are used: Na, K, Mg, Ca, and Ba added as the metal hydroxide salt, Sr added as strontium oxide; ND = Not detectable; NM = Not measured; EA = Ethyl Acrylate; BA = Butyl Acrylate; MMA = Methyl Methacrylate AOPA = Acryloxypropionic Acid; AAEM = Acetoacetoxyethyl Methacrylate IA = Itaconic Acid; Concentration: % by weight in blend; Print Resistance: 0 - 10, 10 = Best; Block Resistance: 0 - 10, 10 = Best

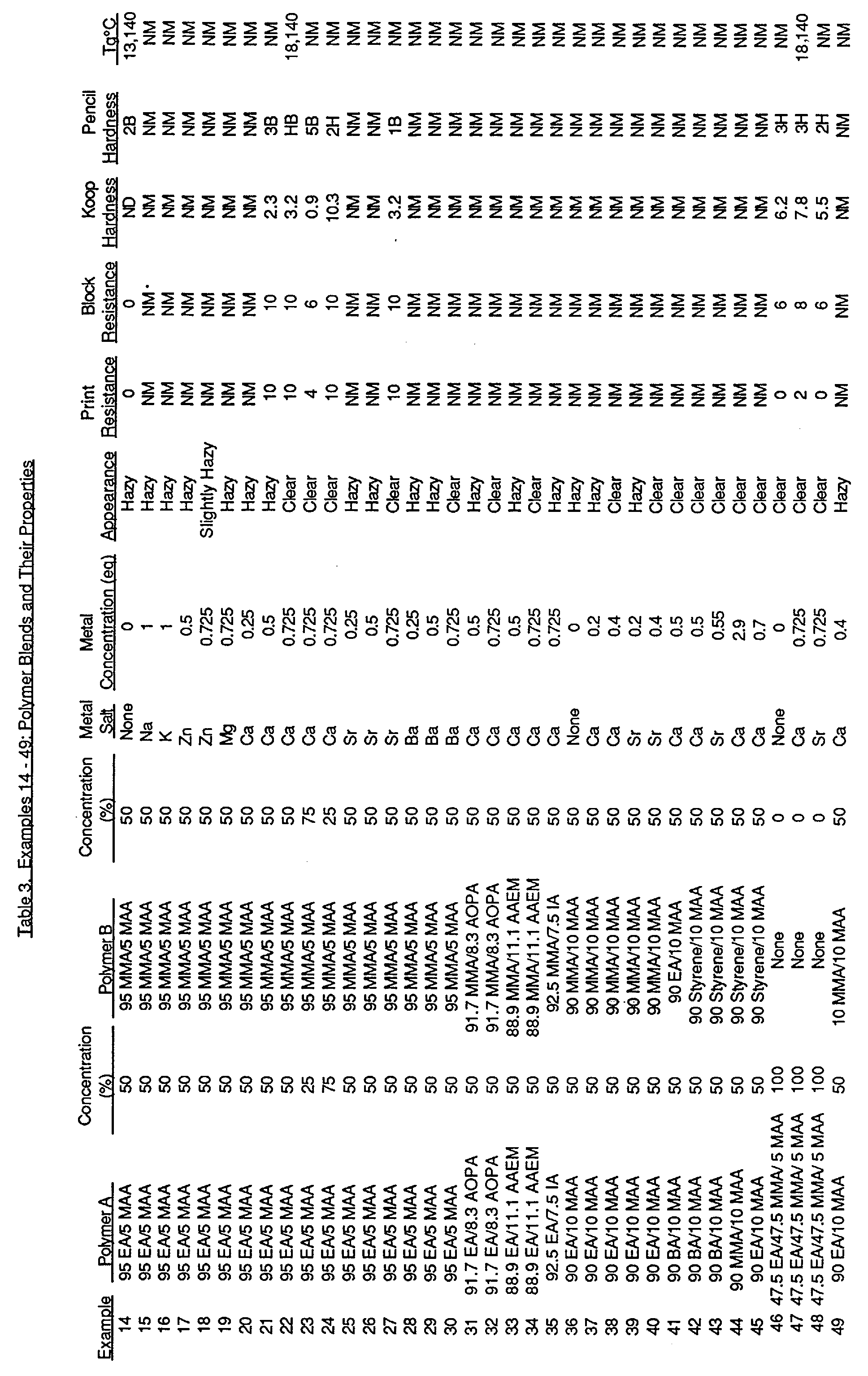

Examples 14 and 36 show that the copolymers are incompatible in the absence of metal ions.

Examples 15 - 19 show that alkali metals, zinc and magnesium, are ineffective or not completely effective at compatibilizing otherwise incompatible copolymers blends.

Examples 22 - 24, 27, 30, 32, 34 - 35, 38, 40 - 45 show that calcium, strontium and barium are effective at compatibilizing otherwise incompatible copolymers and produce polymers having improved physical properties.

Example 35 shows that a blend of ethyl acrylate and methylmethacrylate copolymers containing itaconic acid are not compatibilized using the method described in this invention.

Example 49 shows that a blend of a butyl acrylate and methylmethacrylate copolymers containing methacrylic acid could not be compatibilized using the method described in this invention.

Examples 22 and 47 show blends of compatibilized ethyl acrylate and methylmethacrylate containing methacrylate acid are heterogeneous.

## Claims

1. A blend of addition copolymers comprising a first copolymer and a second copolymer, each independently comprising from 70 to 95 weight percent of monomers comprising methyl (meth)acrylate, ethyl (meth)acrylate, propyl (meth)acrylate, butyl (meth)acrylate, isobutyl (meth)acrylate, 2-ethylhexyl (meth)acrylate, lauryl (meth)acrylate, (meth)acrylamide or (meth)acrylonitrile, and 30 to 5 weight percent of functional unsaturated monomers comprising (meth)acrylic acid, acryloxypropionic acid or acetoacetoxyethyl (meth)acrylate; and a compatibilizing amount of calcium hydroxide, barium hydroxide or strontium oxide; wherein the first copolymer and the second copolymer are incompatible copolymers, and the metal compound is added to compatibilize otherwise incompatible copolymer blends.

2. The blend of Claim 1 comprising from 5 to 95 weight percent of the first copolymer and from 95 to 5 weight percent of the second copolymer.

3. A process of forming compatible copolymer blends from otherwise incompatible copolymers which comprises mixing a compatibilizing amount of calcium hydroxide, barium hydroxide or strontium oxide with from 5 to 95 weight percent of a first copolymer and from 5 to 95 weight percent of a second copolymer, each copolymer independently comprising from 70 to 95 weight percent of monomers comprising methyl (meth)acrylate, ethyl (meth)acrylate, propyl (meth)acrylate, butyl (meth)acrylate, isobutyl (meth)acrylate, 2-ethylhexyl (meth)acrylate, lauryl (meth)acrylate, (meth)acrylamide or (meth)acrylonitrile, and 30 to 5 weight percent of functional unsaturated monomers comprising (meth)acrylic acid, acryloxypropionic acid or acetoacetoxyethyl (meth)acrylate.

4. Use of calcium hydroxide, barium hydroxide or strontium oxide to compatibilise two copolymers that otherwise would be incompatible, wherein the copolymers each independently comprise from 70 to 95 weight percent of monomers comprising methyl (meth)acrylate, ethyl (meth)acrylate, propyl (meth)acrylate, butyl (meth)acrylate, isobutyl (meth)acrylate, 2-ethylhexyl (meth)acrylate, lauryl (meth)acrylate, (meth)acrylamide or (meth)acrylonitrile, and 30 to 5 weight percent of functional unsaturated monomers comprising (meth)acrylic acid, acryloxypropionic acid or acetoacetoxyethyl (meth)acrylate.

## Patentansprüche

1. Mischung von Additionscopolymeren, umfassend ein erstes Copolymer und ein zweites Copolymer, die jeweils unabhängig voneinander 70 bis 95 Gew.-% von Monomeren, umfassend Methyl(meth)acrylat, Ethyl(meth)acrylat, Propyl(meth)acrylat, Butyl(meth)acrylat, Isobutyl(meth)acrylat, 2-Ethylhexyl(meth)acrylat, Lauryl(meth)acrylat, (Meth)acrylamid oder (Meth)acrylnitril, und 30 bis 5 Gew.-% von funktionell ungesättigen Monomeren, umfassend (Meth)acrylsäure, Acryloxypropionsäure oder Acetoacetoxyethyl(meth)acrylat, umfassen, und eine verträglich machende Menge von Calciumhydroxid, Bariumhydroxid oder Strontiumoxid; wobei das erste Copolymer und das zweite Copolymer unverträgliche Copolymere sind und die Metallverbindung zugegeben wird, um die andernfalls unverträglichen Copolymere verträglich zu machen.

2. Mischung nach Anspruch 1, umfassend 5 bis 95 Gew.-% von dem ersten Copolymer und 95 bis 5 Gew.-% von dem zweiten Copolymer.

3. Verfahren zur Herstellung von verträglichen Copolymer-Mischungen von andernfalls unverträglichen Copolymeren, welches das Mischen einer verträglich machenden Menge von Calciumhydroxid, Bariumhydroxid oder Strontiumoxid mit 5 bis 95 Gew.-% von einem ersten Copolymer und 5 bis 95 Gew.-% von einem zweiten Copolymer umfaßt, wobei jedes Copolymer unabhängig voneinander 70 bis 95 Gew.-% von Monomeren umfaßt, die Methyl(meth)acrylat, Ethyl(meth)acrylat, Propyl(meth)acrylat, Butyl (meth)acrylat, Isobutyl(meth)acrylat, 2-Ethylhexyl(meth)acrylat, Lauryl(meth)acrylat, (Meth)acrylamid oder (Meth)acrylnitril umfassen, und 30 bis 5 Gew.-% von funktionell ungesättigen Monomeren, die (Meth)acrylsäure, Acryloxypropionsäure oder Acetoacetoxyethyl(meth)acrylat umfassen.

4. Verwendung von Calciumhydroxid, Bariumhydroxid oder Strontiumoxid, um zwei Copolymere verträglich zu machen, die andernfalls unverträglich wären, wobei die Copolymere jeweils unabhängig voneinander 70 bis 95 Gew.-% von Monomeren, umfassend Methyl(meth)acrylat, Ethyl(meth)acrylat, Propyl(meth)acrylat, Butyl(meth)acrylat, Isobutyl(meth)acrylat, 2-Ethylhexyl(meth)acrylat, Lauryl(meth)acrylat, (Meth)acrylamid oder (Meth)acrylnitril, und 30 bis 5 Gew.-% von funktionell ungesättigten Monomeren, umfassend (Meth)acrylsäure, Acryloxypropionsäure oder Acetoacetoxyethyl(meth)acrylat, umfassen.

## Revendications

1. Mélange de copolymères d'addition, comprenant un premier copolymère et un deuxième copolymère, chacun, indépendamment de l'autre, comprenant de 70 à 95 % en poids de monomères comprenant le (méth)acrylate de méthyle, le (méth)acrylate d'éthyle, le (méth)acrylate de propyle, le (méth)acrylate de butyle, le (méth)acrylate d'isobutyle, le (méth)acrylate de 2-éthylhexyle, le (méth)acrylate de lauryle, le (méth)acrylamide ou le (méth)acrylonitrile, et de 30 à 5 % en poids de monomères insaturés fonctionnels comprenant l'acide (méth)acrylique, l'acide acryloxypropionique ou le (méth)acrylate d'acétoacétoxyéthyle ; et une quantité d'hydroxyde de calcium, d'hydroxyde de baryum ou d'oxyde de strontium produisant une compatibilité ; où le premier copolymère et le deuxième copolymère sont des copolymères incompatibles, et le composé métallique est ajouté pour rendre compatibles les mélanges de copolymères par ailleurs incompatibles.

2. Mélange selon la revendication 1, comprenant de 5 à 95 % en poids du premier copolymère et de 95 à 5 % en poids du deuxième copolymère.

3. Procédé pour former des mélanges compatibles de copolymères à partir de copolymères par ailleurs incompatibles, qui consiste à mélanger une quantité produisant une compatibilité, d'hydroxyde de calcium, d'hydroxyde de baryum ou d'oxyde de strontium avec de 5 à 95 % en poids d'un premier copolymère et de 5 à 95 % en poids d'un deuxième copolymère, chaque copolymère comprenant, indépendamment l'un de l'autre, de 70 à 95 % en poids de monomères comprenant le (méth)acrylate de méthyle, le (méth)acrylate d'éthyle, le (méth)acrylate de propyle, le (méth)acrylate de butyle, le (méth)acrylate d'isobutyle, le (méth)acrylate de 2-éthylhexyle, le (méth)acrylate de lauryle, le (méth)acrylamide ou le (méth)acrylonitrile, et de 30 à 5 % en poids de monomères insaturés fonctionnels comprenant l'acide (méth)acrylique, l'acide acryloxypropionique ou le (méth)acrylate d'acétoacétoxyéthyle.

4. Utilisation d'hydroxyde de calcium, d'hydroxyde de baryum ou d'oxyde de strontium pour rendre compatibles deux copolymères qui autrement seraient incompatibles, dans laquelle les copolymères, indépendamment l'un de l'autre, comprennent chacun de 70 à 95 % en poids de monomères comprenant le (méth)acrylate de méthyle, le (méth)acrylate d'éthyle, le (méth)acrylate de propyle, le (méth)acrylate de butyle, le (méth)acrylate d'isobutyle, le (méth)acrylate de 2-éthylhexyle, le (méth)acrylate de lauryle, le (méth)acrylamide ou le (méth)acrylonitrile, et de 30 à 5 % en poids de monomères insaturés fonctionnels comprenant l'acide (méth)acrylique, l'acide acryloxypropionique ou le (méth)acrylate d'acétoacétoxyéthyle.
